# DEMANDE DE BREVET EUROPEEN

(11) **EP 4 513 736 A1**
(43) Date de publication de la demande: **26.02.2025**
(21) Numéro de dépôt: 24196075.6
(22) Date de dépôt: 23.08.2024
(51) Int. Cl.: H02M 1/42

(54) **CIRCUIT DE CORRECTION DE FACTEUR DE PUISSANCE**

(30) Priorité: 23.08.2023 FR 2308884
(71) Demandeur: Valeo eAutomotive Germany GmbH, 91056 Erlangen (DE)
(72) Inventeur: CHAITANYA, Srikrishna, 600130 Tamil Nadu (IN); MESSI, Norbert, 95892 Cergy Pontoise (FR)
(74) Mandataire: Valeo Powertrain Systems

(57) **Abrégé**

L'invention concerne un dispositif électrique (1) comprenant
-Une interface d'entrée (T1) destinée à être connectée à une source de tension alternative,
-Une interface de sortie (T2) destinée à être connectée à une unité de stockage d'énergie électrique,
-Un circuit de correction de facteur de puissance (10) monté en totem-pole comprenant au moins un demi-pont de commutation de puissance à haute fréquence (11), et un demi-pont de commutation à basse fréquence (12), les demi-ponts comprenant chacun au moins deux interrupteurs (S1, S2, D3, D4), le demi-pont de commutation de puissance à haute fréquence (11) comprenant en outre une inductance (L1),
-Un système de contrôle (20) dudit circuit de correction de facteur de puissance (10), agencé pour générer les signaux de pilotage (P1, P2) des interrupteurs du au moins un demi-pont de commutation de puissance à haute fréquence (11),
caractérisé en ce que le système de contrôle (20) comprend au moins une branche positive (30), agencée pour générer un premier jeu de valeurs de rapports cycliques (α₊) pour les signaux de pilotage (P1, P2) à partir du demi-cycle positif de la tension alternative en entrée du dispositif, et une branche négative agencée pour générer un deuxième jeu de valeurs de rapports cycliques (α₋) pour les signaux de pilotage (P1, P2) à partir du demi-cycle négatif de la tension alternative en entrée du dispositif.

## Description

La présente invention concerne un dispositif électrique comprenant :
- Une interface d'entrée destinée à être connectée à une source de tension alternative,
- Une interface de sortie destinée à être connectée à une unité de stockage d'énergie électrique,
- Un circuit de correction de facteur de puissance monté en totem-pole comprenant au moins un demi-pont de commutation de puissance à haute fréquence, et un demi-pont de commutation à basse fréquence, les demi-ponts comprenant au moins deux interrupteurs, le demi-pont de commutation de puissance à haute fréquence comprenant en outre une inductance,
- Un système de contrôle dudit circuit de correction de facteur de puissance agencé pour générer les signaux de pilotage des interrupteurs du au moins un demi-pont de commutation de puissance à haute fréquence.

Un tel dispositif sert à réaliser une conversion d'une tension alternative appliquée sur l'interface d'entrée dudit dispositif vers une tension continue au moyen du circuit de correction de facteur de puissance, ladite tension continue étant destinée à la charge d'une unité de stockage d'énergie électrique connectée à l'interface de sortie.

Lors de cette conversion, le dispositif peut appliquer des marges en phase au courant d'entrée. Cette correction en phase permet de compenser un décalage angulaire entre la tension et le courant d'entrée, ce décalage pouvant générer des distorsions harmoniques.

Lors de cette même conversion, le dispositif peut aussi appliquer des marges en gain au courant d'entrée.

Un tel dispositif est par exemple intégré à un chargeur embarqué d'une unité de stockage d'énergie électrique de véhicule.

Le circuit de correction de facteur de puissance monté en totem-pole est une variante connue des circuits de correction de facteur de puissance. Il s'agit d'un circuit avantageux du fait de sa bonne efficacité et de son nombre de composants réduit en comparaison d'autres solutions populaires de circuits de correction de facteur de puissance.

Il est néanmoins connu que pour un tel dispositif comprenant un circuit de correction de facteur de puissance monté en totem-pole, lors du passage à zéro du courant alternatif appliqué sur l'interface d'entrée, on constate des distorsions sur ce même courant.

Ces distorsions peuvent prendre la forme de pics de courant, positifs et négatifs, autour du passage à zéro.

Ces pics de courant sont dus au fait que, lorsque la tension alternative en entrée du dispositif passe du demi-cycle positif au demi-cycle négatif ou inversement, le rapport cyclique du signal de pilotage d'un interrupteur d'au moins un demi-pont de commutation de puissance à haute fréquence passe brusquement d'une valeur proche de 100% à une valeur proche de 0%, et le rapport cyclique du signal de pilotage d'un autre interrupteur du même demi-pont passe brusquement d'une valeur proche de 0% à une valeur proche de 100%. A la suite de ces changements brusques de rapports cyclique, à cause de la capacitance parasite et de la lenteur du recouvrement inverse de la diode parasite des interrupteurs à transistors, une tension égale à la tension de sortie est appliquée à l'inductance du au moins un demi-pont de commutation puissance à haute fréquence.

De la même manière, il est connu qu'après le passage à zéro de la tension alternative, le système de contrôle n'a pas la bande passante pour suivre les changements brusques de rapports cyclique et suivre le profil de la tension d'entrée pour calculer les marges en gain et en phase à appliquer au courant d'entrée. Il en résulte une période de temps où les signaux de pilotage du au moins un demi-pont de commutation de puissance à haute fréquence ne sont pas générés de manière appropriée par le système de contrôle, créant de la même manière des pics de courant autour du passage à zéro.

De telles distorsions créent des effets indésirables dans le dispositif électrique, ces effets pouvant perturber le bon fonctionnement des éléments électriques connectés aux interfaces, notamment une augmentation du taux de distorsion harmonique et des perturbations de mode commun.

Il existe un besoin pour supprimer ces distorsions.

L'invention a pour but de répondre à ce besoin à l'aide d'un dispositif électrique comprenant
- Une interface d'entrée destinée à être connectée à une source de tension alternative
- Une interface de sortie destinée à être connectée à une unité de stockage d'énergie électrique,
- Un circuit de correction de facteur de puissance monté en totem-pole comprenant au moins un demi-pont de commutation de puissance à haute fréquence, et un demi-pont de commutation à basse fréquence, les demi-ponts comprenant au moins deux interrupteurs, le demi-pont de commutation de puissance à haute fréquence comprenant en outre une inductance,
- Un système de contrôle dudit circuit de correction de facteur de puissance agencé pour générer les signaux de pilotage des interrupteurs du au moins un demi-pont de commutation de puissance à haute fréquence,
caractérisé en ce que le système de contrôle comprend au moins une branche positive, agencée pour générer un premier jeu de valeurs de rapports cycliques pour les signaux de pilotage à partir du demi-cycle positif de la tension alternative en entrée du dispositif, et une branche négative agencée pour générer un deuxième jeu de valeurs de rapports cycliques pour les signaux de pilotage à partir du demi-cycle négatif de la tension alternative en entrée du dispositif.

La présence d'une branche positive et d'une branche négative au sein du système de contrôle permet de générer indépendamment des jeux de rapports cycliques pour les signaux de pilotages de telle sorte à ce qu'ils soient adaptés pour le demi-cycle positif et pour le demi-cycle négatif de la tension alternative en entrée du dispositif respectivement. Ceci résulte en une meilleure gestion par le système de contrôle du passage du demi-cycle positif au demi-cycle négatif et du passage du demi-cycle négatif au demi-cycle positif de la tension alternative appliquée sur l'interface d'entrée et donc une réduction des oscillations de courant lors du passage à zéro de la tension alternative, et finalement en une réduction d'effets indésirables dans le dispositif électrique.

Selon un mode de réalisation, le système de contrôle comprend un module de boucle à verrouillage de phase agencé pour générer une tension de référence alternative, ladite tension de référence alternative étant en phase avec la tension alternative sur l'interface d'entrée du dispositif.

Dans tout ce qui précède, le système de contrôle peut comprendre un module de séparation recevant en entrée la tension de référence alternative et étant agencé pour générer une tension positive correspondant au demi-cycle positif de la tension de référence alternative et une tension négative correspondant au demi-cycle négatif de la tension de référence alternative.

Dans tout ce qui précède, le module de séparation est agencé pour fournir un signal de sélection indiquant le présent demi-cycle, positif ou négatif, de la tension alternative en entée du dispositif.

Dans tout ce qui précède, la branche positive et la branche négative peuvent comprendre chacune un module de multiplication de courant et un module de contrôle de courant, lesdites branches étant agencées pour recevoir respectivement la tension positive ou la tension négative du module de séparation, et le courant en entrée du dispositif, et agencées pour fournir chacune un jeu de valeurs de rapports cycliques à appliquer aux signaux de pilotage des interrupteurs du au moins un demi-pont de commutation de puissance à haute fréquence.

Selon un mode de réalisation, chaque module de multiplication de courant est agencé pour recevoir respectivement une tension du module de séparation et la multiplier avec le courant en entrée du dispositif, et fournir en sortie un signal de puissance instantanée.

Selon un mode de réalisation, chaque module de contrôle de courant est agencé pour recevoir une valeur de puissance instantanée en sortie du module de multiplication, et pour générer un jeu de valeurs de rapports cycliques en fonction des marges en gain et en phase à appliquer au courant alternatif en entrée du circuit de correction de facteur de puissance.

La génération des rapports cycliques peut être réalisée par exemple par une table de correspondance entrée ou par une ou des équations, en prenant en entrée la valeur de puissance instantanée correspondante.

Dans tout ce qui précède, le système de contrôle peut comprendre un module de sélection de rapport cyclique agencé pour fournir un jeu de valeurs de rapports cycliques correspondant au jeu de valeurs de rapports cycliques de la branche positive lors du demi-cycle positif de la tension alternative en entrée du dispositif, ou au jeu de valeurs de rapports cycliques de la branche négative lors du demi-cycle négatif de la tension alternative en entrée du dispositif.

Dans tout ce qui précède, le système de contrôle peut comprendre un générateur de signaux modulés en largeur d'impulsion, agencé pour générer les signaux de pilotages des interrupteurs du au moins un demi-pont de commutation de puissance à haute fréquence en accordance avec le jeu de rapports cycliques en sortie du module de sélection.

Selon un mode de réalisation, le au moins un demi-pont de commutation de puissance à haute fréquence comprend une inductance et deux interrupteurs à transistors.

Selon un mode de réalisation, les interrupteurs à transistors du au moins un demi-pont de commutation de puissance à haute fréquence sont composés d'un transistor, par exemple un transistor MOSFET, et d'une diode de roue libre pouvant être la diode intrinsèque du transistor MOSFET.

Selon un mode de réalisation, les interrupteurs du demi-pont de commutation à basse fréquence sont des diodes. Deux diodes sont par exemples prévues.

En variante, les interrupteurs du demi-pont de commutation à basse fréquence sont des interrupteurs pilotables, par exemple des transistors, chaque interrupteur mettant en oeuvre un IGBT ou un MOSFET par exemple. Dans cette variante, deux interrupteurs pilotables sont prévus. Toujours dans cette variante, le circuit de correction de facteur de puissance est bidirectionnel, et donc possède un mode de fonctionnement dans lequel une unité de stockage d'énergie électrique connectée à l'interface de sortie du dispositif est déchargée pour fournir une source de tension alternative sur l'interface d'entrée.

L'invention pourra être mieux comprise à la lecture de la description qui va suivre d'exemples non limitatifs de mise en oeuvre de celle-ci :
- [Fig.1] représente un dispositif électrique selon un exemple de mise en oeuvre de l'invention,
- [Fig.2] représente un système de contrôle d'un circuit de correction de facteur de puissance selon un exemple de mise en oeuvre de l'invention, intégré au dispositif électrique de la Figure 1,
- [Fig. 3a], [Fig. 3b], [Fig. 3c] correspondent à des courbes de tension et de courant permettant d'illustrer un effet de l'invention

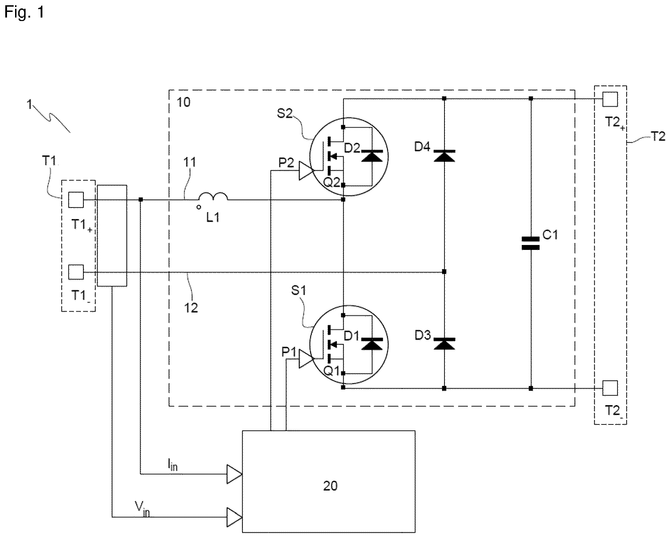

Le dispositif 1 tel que représenté dans la Figure 1 comprend une interface d'entrée T1 et une interface de sortie T2. Le dispositif 1 comprend aussi un circuit de correction de facteur de puissance 10, et un circuit de contrôle pour ce circuit de correction de facteur de puissance 20.

Selon la Figure 1, le circuit de correction de facteur de puissance 10 comprend un demi-pont de commutation 11. Ledit demi-pont 11 est connecté à la borne positive T1 ₊ de l'interface d'entrée T1 par sa branche médiane. Le demi-pont 11 comprend sur sa branche médiane une inductance L1. La branche médiane est connectée à la branche supérieure et la branche inférieure du demi-pont 11 en un point commun aux trois branches. La branche inférieure comprend un interrupteur inférieur S1 et la branche supérieure comprend un interrupteur supérieur S2. La branche supérieure est connectée à la borne positive T2+ de l'interface de sortie T2. La branche inférieure est connectée à la borne négative T2₋ de l'interface T2.

Les interrupteurs S1 et S2 tels que représentés dans la Figure 1 comprennent chacun un transistor MOSFET, respectivement Q1 et Q2 et une diode de roue libre, respectivement D1 et D2.

Ledit demi-pont de commutation 11 est qualifié de demi-pont de commutation de puissance du fait de la présence de l'inductance L1. La présence de cette inductance permet d'appliquer un gain au courant d'entrée du circuit de correction de facteur de puissance 10.

Le demi-pont de commutation 11 est aussi qualifié de demi-pont de commutation haute-fréquence du fait que les interrupteurs S1 et S2 sont pilotés par des signaux de pilotage, respectivement P1 et P2, de fréquence plus élevée que la fréquence du courant appliqué sur l'interface d'entrée T1. Par exemple, la tension Vᵢₙ appliqué sur l'interface d'entrée T1 peut être à une fréquence de 50Hz ou de 60Hz et les signaux de pilotage P1 et P2 peuvent être à une fréquence entre 50kHz et 100kHz.

Le circuit de correction de facteur de puissance 10 représenté dans la Figure 1 comprend aussi un demi-pont de commutation 12. Ledit demi-pont 12 est connecté à la borne négative T1₋ de l'interface d'entrée T1 par sa branche médiane. La branche médiane est connectée à la branche supérieure et à la branche inférieure du demi-pont 12 en un point commun. La branche inférieure comprend une diode inférieure D3 et la branche supérieure comprend une diode supérieure D4. La diode supérieure D4 est connectée à la borne positive T2+ de l'interface de sortie T2 et la diode inférieure D3 est connectée à la borne négative T2₋ de l'interface de sortie T2.

Ledit demi-pont de commutation 12 est qualifié de demi-pont de commutation à basse fréquence du fait que les diodes D3 et D4 passent de bloquantes à conductrices et inversement selon la fréquence du courant appliqué à l'interface d'entrée T1.

Le circuit de correction de facteur de puissance 10 comprend aussi une capacitance de filtrage C1, connectée entre la borne positive T2+ et la borne négative T2- de l'interface de sortie T2.

Un tel circuit de correction de facteur de puissance 10 tel que représenté dans la Figure 1, avec un demi-pont de commutation de puissance haute fréquence 11 et un demi-pont de commutation basse fréquence 12 est qualifié de circuit de correction de facteur de puissance monté en totem-pole.

Le dispositif 1 représenté dans la Figure 1 comprend aussi un système de contrôle pour circuit de correction de facteur de puissance 20 agencé pour générer les signaux de pilotage P1 et P2 des interrupteurs S1 et S2 du demi-pont de commutation de puissance à haute fréquence 11 du circuit de correction de facteur de puissance 10. Ledit système de contrôle 20 reçoit en entrée la tension alternative Vᵢₙ(t) et le courant alternatif Iᵢₙ(t) appliqués en entrée du dispositif 1.

Le système de contrôle pour circuit de correction de facteur de puissance 20 peut être un ordinateur par exemple un microcontrôleur, ou un circuit intégré par exemple un FPGA ou un ASIC.

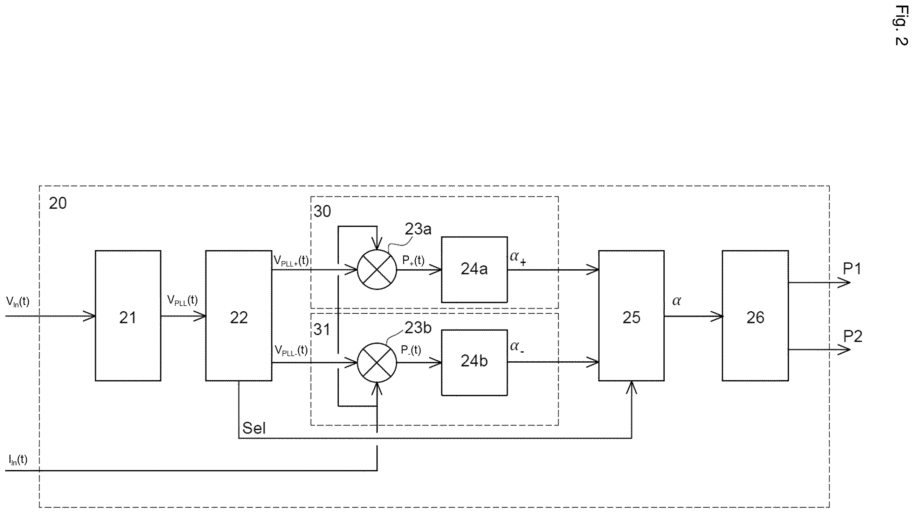

Le système de contrôle pour circuit de correction de facteur de puissance 20 va être décrit en référence à la Figure 2.

Le circuit de contrôle 20 tel que décrit dans la Figure 2 comprend un module de boucle à verrouillage de phase 21. Ce module est agencé pour générer, à partir de la tension Vᵢₙ prélevée en entrée du dispositif 1 une tension de référence alternative V_{PLL}(t). Cette tension de référence V_{PLL}(t) est agencée pour être en phase avec la tension d'entrée Vin(t).

Ladite tension de référence alternative V_{PLL}(t) est fournie à un module de séparation 22, ledit module étant agencé pour générer une tension positive V_{PLL+}(t) correspondant au demi-cycle positif de la tension alternative de référence V_{PLL}(t) et une tension négative V_{PLL-}(t) correspondant au demi-cycle négatif de V_{PLL}(t).

Le module de séparation 22 est agencé en outre pour générer un signal de sélection Sel indiquant le présent demi-cycle de la tension de référence V_{PLL}(t).

Le circuit de contrôle 20 tel que décrit dans la Figure 2 comprend une branche positive 30 et une branche négative 31.

La branche positive 30 est agencée pour recevoir la tension de référence positive V_{PLL+}(t) du module de séparation 22 et le courant Iᵢₙ(t) en entrée du dispositif 1, et est agencée pour générer un signal α₊. Le signal α₊ correspond aux valeurs de rapports cycliques à appliquer aux signaux de pilotage P1 et P2, respectivement des interrupteurs S1 et S2 du demi-pont de commutation de puissance à haute fréquence 11, pour appliquer les marges en phase et en gain désirées au courant d'entrée Iᵢₙ(t).

La branche négative 31 est agencée pour recevoir la tension de référence négative V_{PLL-}(t) du module de séparation 22 et le courant Iᵢₙ(t) en entrée du dispositif 1, et est agencé pour fournir un signal α₋. Le signal α₋ correspond aux valeurs de rapports cycliques à appliquer aux signaux de pilotage P1 et P2 respectivement des interrupteurs S1 et S2 du demi-pont de commutation de puissance à haute fréquence 11, pour appliquer les marges en phase et en gain désirées au courant d'entrée Iᵢₙ(t).

En exemple, les valeurs des marges en phase et en gain désirées peuvent être respectivement de 45° et de 12dB.

La branche positive 30 telle que représentée dans la Figure 2 comprend un module de multiplication 23a agencé pour multiplier la tension de référence positive V_{PLL+}(t) en sortie du module de séparation 22 et le courant Iᵢₙ(t) prélevé en entrée de dispositif 1. L'opération de multiplication résulte en l'obtention d'une valeur de puissance instantanée P+(t) représentative de la puissance instantanée en entrée de dispositif 1 durant le demi-cycle positif de V_{PLL}(t).

La branche positive 30 comprend en outre un module de contrôle de courant 24a. Ce module est agencé pour générer un jeu de valeurs de rapports cycliques α₊ des signaux de pilotage P1 et P2 des interrupteurs S1 et S2 du demi-pont de commutation de puissance à haute fréquence 11. Ce jeu de valeurs de rapports cycliques α₊ est généré à partir de la puissance instantanée P+(t) en sortie du module de multiplication 23a.

Similairement dans l'exemple représenté dans la Figure 2, la branche négative 31 comprend un module de multiplication 23b prenant en entrée la tension de référence négative V_{PLL-}(t) et le courant d'entrée Iᵢₙ(t), et générant la puissance instantanée P₋(t) représentative de la puissance instantanée en entrée de dispositif 1 durant le demi-cycle négatif de V_{PLL}(t). Cette puissance instantanée P₋(t) est transmise à un module de contrôle de courant 24b agencé pour générer un jeu de valeurs de rapports cycliques α₋ des signaux de pilotage P1 et P2 des interrupteurs S1 et S2 du demi-pont de commutation de puissance à haute fréquence 11.

Dans l'exemple représenté dans la Figure 2, le jeu de valeurs de rapports cycliques α₊ en sortie de branche positive 30 et le jeu de valeurs de rapports cycliques α₋ en sortie de branche négative 31 sont fournies à un module de sélection 25. Ce module de sélection 25 détermine grâce au signal de sélection Sel en sortie de module de séparation 22 quel jeu de valeurs, soit α₊ pour le demi-cycle positif soit α₋ pour le demi-cycle négatif, doit être utilisé pour le pilotage des interrupteurs S1 et S2 du demi-pont de puissance à haute fréquence 11. Le jeu de valeurs de rapports cycliques sélectionné en sortie de module de sélection 25 est noté α.

Le système de contrôle représenté à la Figure 2 comprend aussi un générateur de signaux modulés en largeur d'impulsion 26. Les signaux P1 et P2 générés par ce générateur 26 sont les signaux de pilotage des interrupteurs S1 et S2 du demi-pont de commutation de puissance haute fréquence 11. Les signaux de pilotage P1 et P2 sont générés par le générateur 26 avec un rapport cyclique en accordance avec le jeu de valeurs de rapports cycliques α fourni par le module de sélection 25.

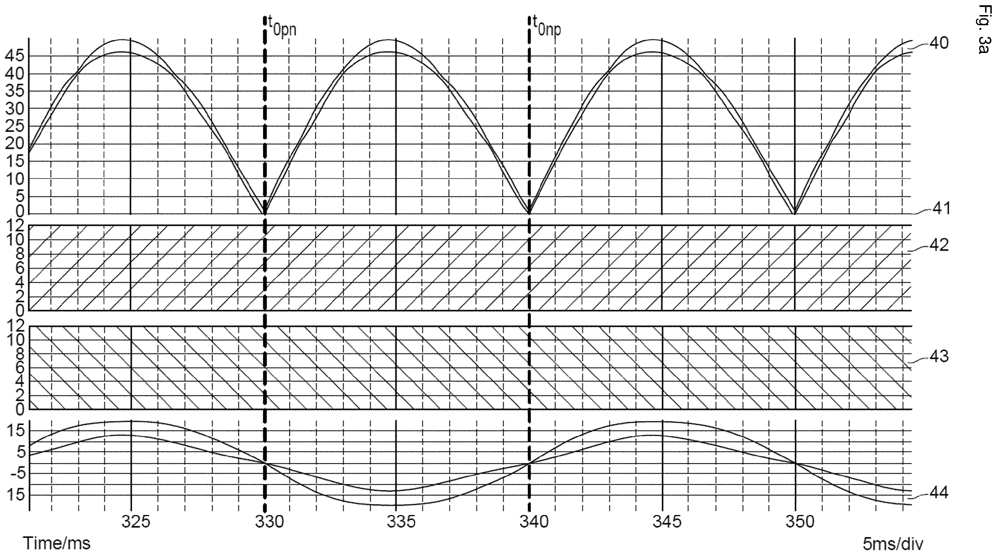

La Figure 3a représente sur une même échelle temporelle en abscisse :
- Un graphe 40 représentant le courant en ampères parcourant la diode D3,
- Un graphe 41 représentant le courant en ampères parcourant la diode D4,
- Un graphe 42 représentant la tension en volts du signal de pilotage P2,
- Un graphe 43 représentant la tension en volts du signal de pilotage P1, et
- Un graphe 44 représentant le courant en ampères d'entrée Iᵢₙ(t).

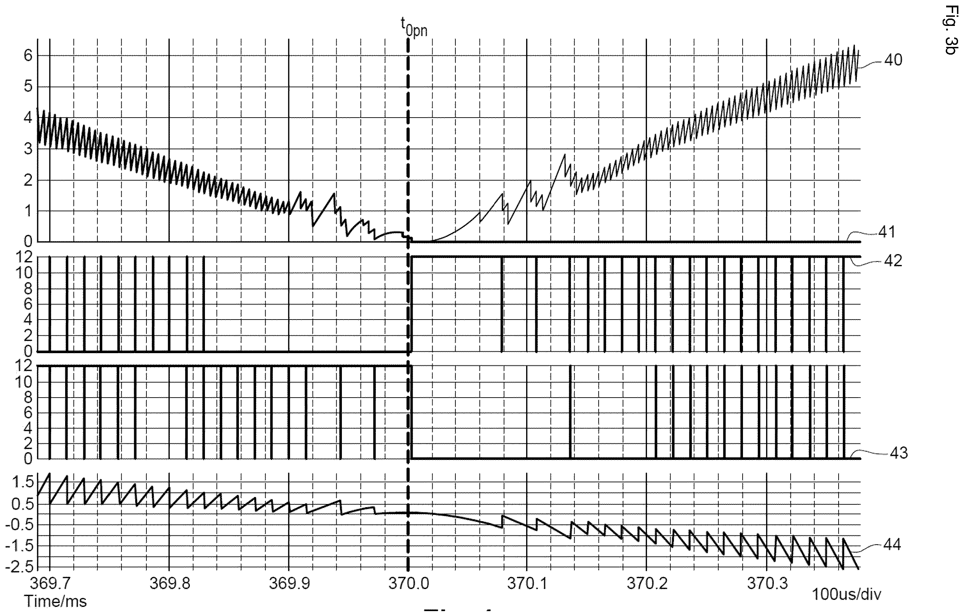

La Figure 3b représente sur une même échelle temporelle en abscisse les mêmes graphes que la Figure 3a, focalisé sur un passage à l'instant t₀ₚₙ de Iᵢₙ du demi-cycle positif au demi-cycle négatif.

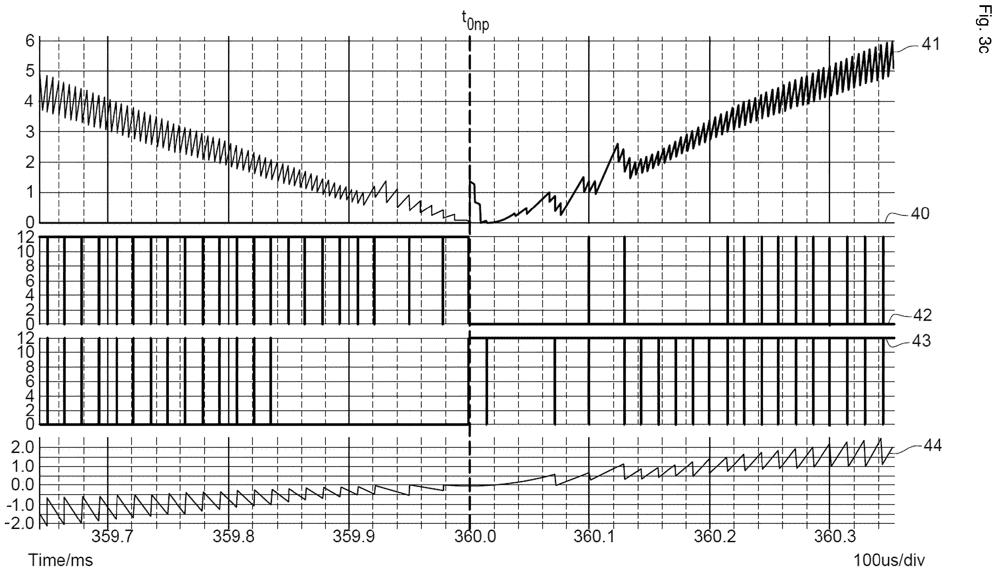

La Figure 3c représente sur une même échelle temporelle en abscisse les mêmes graphes que la Figure 3a, focalisé sur un passage à l'instant t₀ₙₚ de Iᵢₙ du demi-cycle négatif au demi-cycle positif.

Dans cet exemple, le courant d'entrée Iᵢₙ(t) a pour fréquence 50Hz, ce qui peut être observé sur le graphes 40, 41 et 44 de la Figure 3a.

Dans cet exemple, la fréquence des signaux de pilotage P1 et P2 est de 80kHz, ce qui peut être observé sur les graphes 42 et 43 des Figures 3b et 3c.

On peut observer dans les graphes 40 et 41 des Figure 3a, 3b et 3c que les diodes D3 et D4 sont passantes respectivement lors du demi-cycle négatif et du demi-cycle positif du courant d'entrée Iᵢₙ.

On peut observer sur les Figures 3a, 3b et 3c que sur le graphe 44 le courant d'entrée Iᵢₙ(t) ne comporte pas de distorsions notables lors du passage à zéro, que ce soit du passage du demi-cycle positif au demi-cycle négatif comme représenté dans la Figure 3b, ou que ce soit lors du passage du demi-cycle négatif au demi-cycle positif comme représenté dans la Figure 3c.

Dans l'exemple représenté dans la Figure 3b, avant le passage à l'instant t₀ₚₙ du demi-cycle positif au demi-cycle négatif du courant Iᵢₙ(t), on peut constater sur le graphe 42 que le signal de pilotage P2 a un rapport cyclique de 0%, et sur le graphe 43 que le signal de pilotage P1 a un rapport cyclique proche de 100%. Ce rapport cyclique nul du signal de pilotage P2 permet à la capacitance parasite de l'interrupteur S2 de se décharger complètement avant le passage à zéro et d'éviter un pic de courant.

Dans l'exemple représenté dans la Figure 3c, avant le passage à l'instant t₀ₙₚ du demi-cycle négatif au demi-cycle positif du courant Iᵢₙ(t), on peut constater sur le graphe 42 que le signal de pilotage P2 a un rapport cyclique proche de 100%, et sur le graphe 43 que le signal de pilotage P1 a un rapport cyclique nul. Ce rapport cyclique nul du signal de pilotage P1 permet à la capacitance parasite de l'interrupteur S1 de se décharger complètement avant le passage à zéro et d'éviter un pic de courant.

Dans l'exemple représenté dans la Figure 3b, après le passage à l'instant t₀ₚₙ du demi-cycle positif au demi-cycle négatif du courant Iᵢₙ(t), on peut constater sur le graphe 42 que le signal de pilotage P2 a un rapport cyclique proche de 100%, et sur le graphe 43 que le signal de pilotage P1 a un rapport cyclique nul. Ce rapport cyclique nul du signal de pilotage P1 permet d'attendre que la diode D3 commence à conduire, comme on peut le remarquer sur la graphe 40, avant de fermer l'interrupteur S1 et de faire passer le courant. Ainsi on prévient un pic de courant après le passage à zéro du courant Iᵢₙ(t).

Dans l'exemple représenté dans la Figure 3c, après le passage à l'instant t₀ₙₚ du demi-cycle négatif au demi-cycle positif du courant Iᵢₙ(t), on peut constater sur le graphe 42 que le signal de pilotage P2 a un rapport cyclique nul et sur le graphe 43 que le signal de pilotage P1 a un rapport cyclique proche de 100%. Ce rapport cyclique nul du signal de pilotage P2 permet d'attendre que la diode D4 commence à conduire, comme on peut le remarquer sur le graphe 41, avant de fermer l'interrupteur S2 et de faire passer le courant. Ainsi on prévient un pic de courant après le passage à zéro du courant Iᵢₙ(t).

Ces valeurs de rapports cycliques des signaux de pilotages P1 et P2 permettant de prévenir les pics de courant avant et après les passages à zéro du courant d'entrée Iᵢₙ(t) sont générées du fait de la séparation du système de contrôle en deux branches, positive 30 et négative 31. La branche positive 30 et la branche négative 31 ne voient que des tensions positives ou nulles et négatives ou nulles respectivement, et le changement de demi-cycle de la tension d'entrée Vᵢₙ n'est pas géré par le modules de contrôle de courant 24a et 24b générant le rapport cyclique des signaux de pilotage, résultant en une meilleure gestion du passage à zéro de la tension d'entrée Vᵢₙ et une réduction des distorsions du courant alternatif Iᵢₙ(t).

L'invention n'est pas limitée à l'exemple de mise en oeuvre qui vient d'être décrit.

En particulier, le circuit 10 de correction de facteur de puissance peut comporter plus d'un demi-pont de commutation de puissance à haute fréquence. Dans ce cas, le nombre de signaux de pilotage générés par le système de contrôle 20 est augmenté en accordance avec le nombre d'interrupteurs dans les demi-ponts de commutation de puissance à haute fréquence.

En particulier, le demi-pont de commutation à basse fréquence 12 peut comporter des interrupteurs pilotables, par exemple à transistors, plutôt que des diodes. Dans ce cas, ces interrupteurs pilotables peuvent être contrôlés par des signaux de pilotage dont la fréquence est idéalement égale à la fréquence de la tension alternative en entrée du dispositif. Ces interrupteurs pilotables peuvent être par exemple des transistors IGBT ou des transistors MOSFET.

Dans ce cas, le circuit 10 de correction de facteur de puissance peut être un circuit bidirectionnel, et donc posséder un mode de fonctionnement dans lequel une source de tension alternative est présente sur l'interface T2 pour fournir une tension alternative à l'interface T1. En exemple on décharge une unité de stockage d'énergie électrique connectée à l'interface T2 pour fournir une tension alternative à l'interface d'entrée T1.

## Revendications

1. - Dispositif électrique (1) comprenant
- Une interface d'entrée (T1) destinée à être connectée à une source de tension alternative,
- Une interface de sortie (T2) destinée à être connectée à une unité de stockage d'énergie électrique,
- Un circuit de correction de facteur de puissance (10) monté en totem-pole comprenant au moins un demi-pont de commutation de puissance à haute fréquence (11), et un demi-pont de commutation à basse fréquence (12), les demi-ponts (11, 12) comprenant chacun au moins deux interrupteurs (S1, S2, D3, D4), le demi-pont de commutation de puissance à haute fréquence (11) comprenant en outre une inductance (L1),
- Un système de contrôle (20) dudit circuit de correction de facteur de puissance (10), agencé pour générer les signaux de pilotage (P1, P2) des interrupteurs du au moins un demi-pont de commutation de puissance à haute fréquence (11),
**caractérisé en ce que** le système de contrôle (20) comprend au moins une branche positive (30), agencée pour générer un premier jeu de valeurs de rapports cycliques (α₊) pour les signaux de pilotage (P1, P2) à partir du demi-cycle positif de la tension alternative en entrée du dispositif, et une branche négative agencée pour générer un deuxième jeu de valeurs de rapports cycliques (α₋) pour les signaux de pilotage (P1, P2) à partir du demi-cycle négatif de la tension alternative en entrée du dispositif.

2. - Dispositif électrique selon la revendication précédente, dans lequel le système de contrôle (20) comprend un module de boucle à verrouillage de phase (21) agencé pour générer une tension de référence alternative (V_{PLL}), ladite tension de référence alternative étant en phase avec la tension alternative en entrée du dispositif (Vᵢₙ).

3. - Dispositif électrique selon la revendication précédente, dans lequel le système de contrôle (20) comprend un module de séparation (22) recevant en entrée la tension de référence alternative (V_{PLL}) et étant agencé pour générer une tension positive (V_{PLL+}) correspondant au demi-cycle positif de la tension de référence alternative et une tension négative (V_{PLL-}) correspondant au demi-cycle négatif de la tension de référence alternative.

4. - Dispositif électrique selon la revendication précédente, dans lequel le module de séparation (22) est agencé pour fournir un signal de sélection (Sel) indiquant le présent demi-cycle, positif ou négatif, de la tension alternative en entée du dispositif (Vᵢₙ).

5. - Dispositif selon l'une quelconque revendications 3 et 4, dans lequel la branche positive (30) et la branche négative (31) comprennent chacune un module de multiplication de courant (23a, 23b) et un module de contrôle de courant (24a, 24b), lesdites branches étant agencées pour recevoir respectivement la tension positive (V_{PLL+}) ou la tension négative (V_{PLL-}) du module de séparation (22) et le courant en entrée du dispositif (Iᵢₙ), et agencées pour fournir chacune un jeu de valeurs rapports cycliques (α+, α₋) à appliquer aux signaux de pilotage (P1, P2) des interrupteurs du au moins un demi-pont de commutation de puissance à haute fréquence (11).

6. - Dispositif selon la revendication précédente, dans lequel chaque module de multiplication de courant (23a, 23b) est agencé pour recevoir une tension du module de séparation (22) et la multiplier avec le courant d'entrée du dispositif (Iᵢₙ), et agencé pour fournir en sortie un signal de puissance instantanée (P₊, P₋).

7. - Dispositif selon la revendication précédente dans lequel chaque module de contrôle de courant (24a, 24b) est agencé pour recevoir la valeur de puissance instantanée (P+, P₋) en sortie d'un module de multiplication (23a, 23b), et pour générer un jeu de rapports cycliques (α₊, α₋) en fonction des marges en gain et en phase à appliquer à un courant alternatif en entrée du circuit de correction de facteur de puissance (Iᵢₙ).

8. - Dispositif électrique selon l'une quelconque des revendications 5 à 7, dans lequel le système de contrôle (20) comprend un module de sélection de rapport cyclique (25) agencé pour fournir un jeu de rapports cycliques (α) correspondant au jeu de rapports cycliques de la branche positive (α₊) lors du demi-cycle positif de la tension alternative en entrée du dispositif (Vᵢₙ), ou au jeu de rapports cycliques de la branche négative (α₋) lors du demi-cycle négatif de la tension alternative en entrée du dispositif.

9. - Dispositif électrique selon l'une quelconque revendication précédente, dans lequel le système de contrôle (20) comprend un générateur de signaux modulés en largeur d'impulsion (26), agencé pour générer les signaux de pilotages des interrupteurs (P1, P2) du au moins un demi-pont de commutation de puissance à haute fréquence (11) en accordance avec le jeu de rapports cycliques (α) en sortie du module de sélection (25).

10. - Chargeur embarqué d'une unité de stockage d'énergie électrique comprenant un dispositif électrique (1) selon l'une des revendications précédentes.
